# EUROPÄISCHE PATENTSCHRIFT

(11) **EP 2 143 581 B1**
(45) Veröffentlichungstag und Bekanntmachung des Hinweises auf die Patenterteilung: **13.06.2012**
(21) Anmeldenummer: 09009024.2
(22) Anmeldetag: 10.07.2009
(51) Int. Cl.: B60J 7/20

(54) **Ansteuerungseinrichtung für Abdeckungen bei Kraftfahrzeugen**
Control device for covers for motor vehicles
Dispositif de commande de couvercles dans des véhicules automobiles

(30) Priorität: 10.07.2008 DE 102008032488
(43) Veröffentlichungstag der Anmeldung: 13.01.2010
(73) Patentinhaber: Webasto AG, 82131 Stockdorf (DE)
(72) Erfinder: Wegener, Fritz, 82205 Gilching (DE)
(74) Vertreter: Bosch, Matthias

(56) Entgegenhaltungen:
- EP-A- 1 038 710
- DE-A1- 10 142 550
- DE-A1- 19 956 882
- DE-A1-102004 060 803
- DE-A1-102005 043 579
- DE-A1-102006 047 914
- FR-A- 2 853 868
- US-B1- 6 682 149

## Beschreibung

Gegenstand der vorliegenden Erfindung ist eine Ansteuerungseinrichtung für Abdeckungen bei Kraftfahrzeugen, insbesondere für Fond-Seitenklappen, wie sie bei Fahrzeugen mit Verdecksystemen üblich sind.

Aus dem Stand der Technik sind Seitenklappenansteuerungseinrichtungen und Seitenklappen bekannt, bei denen die Seitenklappen mittels Seilzugkinematik Bereiche abdecken, die beispielsweise nach dem Entfernen eines Verdecks oder eines Hardtops aus ästhetischen Gründen abgedeckt werden sollten. Derartige Abdeckungsbereiche befinden sich regelmäßig im C-Säulen-Bereich, in dem insbesondere bei Verdecksystemen eine raumgreifende Kinematik zur Betätigung des Verdecksystems untergebracht ist. Bei starren Dachsystemen, bei denen die gesamte Dachkonstruktion vom Karosserierumpf abgehoben und entfernt werden kann, besteht ebenfalls Bedarf, den in der Regel im C-Säulen-Bereich befindlichen Verankerungsbereich nach Entfernen des Dachaufbaus sowohl aus ästhetischen als auch sicherheitsrelevanten Aspekten abzudecken.

Aus dem Stand der Technik ist es daher bekannt, diese Bereiche mittels Abdeckpaneele oder einem flexiblen Verdeckelement (bspw. Textilelement) zu verkleiden, um zum einen ästhetischen Ansprüchen bspw. dem Wunsch nach einem zerklüftungsarmen Konturenverlauf Rechnung zu tragen, als auch zum anderen, um zu verhindern, dass Regenwasser, Laub oder andere Gegenstände in diesen Bereich gelangen und zu Verschmutzungen der Kinematik oder gar Beschädigung derselben führen.

Aufgrund der engen baulichen Gegebenheiten, insbesondere bei mehrteiligen Verdecksystemen, die regelmäßig ein aufwendiges Gestänge zum Aufrichten und Falten des Verdecksystems aufweisen, ist es notwendig, dass eine etwaige Kinematik für eine Ansteuerungseinrichtung platzoptimierend auszuführen ist. Aufgrund der fortschreitenden Automatisierung im Automobilbereich wird vom Markt erwartet, dass bei Cabriolets und Fahrzeugen mit Verdecksystemen sowohl der Auf- und Abbau des Verdecksystems als auch das Abdecken von etwaigen Randbereichen voll automatisiert abläuft.

Aufgabe der vorliegenden Erfindung ist es daher, eine Ansteuerungseinrichtung für Abdeckungen bei Kraftfahrzeugen bereit zu stellen, die auch bei großem Platzmangel dazu in der Lage ist, vollautomatisch von einer Verstauposition in eine Funktionsposition überführt zu werden.

Diese Aufgabe wird durch die erfindungsgemäße Ansteuerungseinrichtung in den Merkmalen gemäß Anspruch 1 gelöst.

Vorteilhafte Weiterbildungen der vorliegenden Erfindung sind in den Unteransprüchen 2 bis 4 gekennzeichnet.

Bei der erfindungsgemäßen Ansteuerungseinrichtung für Abdeckungen bei Kraftfahrzeugen ist eine Abdeckungsklappe vorgesehen, die aus einer im Wesentlichen vertikalen Verstauposition in eine Funktionsposition durch eine Zwangsbewegung überführbar ausgebildet ist, wobei die Zwangsbewegung über folgende Mittel ausgeführt wird:
- ein erstes Führungsmittel, in dem ein erstes Gleitelement im Wesentlichen in vertikaler Bewegungsrichtung beweglich gelagert ist;
- ein zweites Führungsmittel, in dem ein zweites Gleitelement in mindestens zwei zueinander senkrechten Bewegungsrichtungen beweglich gelagert ist;
- einen mit dem zweiten Gleitelement gekoppelten Schwenkarm, der mechanisch mit der Abdeckungsklappe derart verbunden ist, dass bei einer vertikalen Bewegung des zweiten Gleitelements eine vertikale Longitudinalbewegung der Abdeckungsklappe eingeleitet wird und bei einer horizontalen Bewegung des zweiten Gleitelements eine Rotationsbewegung im Schwenkarm und somit eine Schwenkbewegung in der Abdeckungsklappe eingeleitet wird;
- der Schwenkarm ist über ein zug- und druckstabiles Verbindungselement mit der Abdeckungsklappe verbunden. Das zug- und druckstabile Verbindungselement ist so angeordnet, dass Lastkräfte, die auf die Abdeckungsklappe wirken, aufgenommen und abgeleitet werden.

Das Dokument DE 19956882 offenbart eine solche Ansteuerungseinrichtung.

Zweckmäßigerweise ist das zug- und druckstabile Verbindungselement als Stützstange ausgebildet und aus einem thermoplastischen Kunststoff hergestellt und über ein Kugelgelenk einerseits mit dem Schwenkarm und andererseits mit der Abdeckungsklappe verbunden.

Vorteilhafterweise ist das zug- und druckstabile Verbindungselement in seiner Funktionsposition so gelagert, dass die Lastkräfte von einer tragenden Struktur aufgenommen werden.

Da die Abdeckung so angeordnet ist, dass die Möglichkeit besteht, dass ein Fahrzeuginsasse sich auf die Abdeckungsklappe setzen möchte oder Gepäck so gelagert wird, dass eine wesentliche Kraft auf die Abdeckungsklappe einwirkt, ist es erfindungsgemäß zweckmäßig, dass sowohl die Abdeckungsklappe als auch das zug- und druckstabile Verbindungselement sowie die tragende Struktur so ausgebildet ist, dass die Belastungskräfte über das zug- und druckstabile Verbindungselement auf die Fahrzeugkarosserie übertragen werden.

Hierzu wird das zug- und druckstabile Verbindungselement in seiner Funktionsposition mit einem Lager in Verbindung gebracht, das so ausgebildet ist, dass die Belastungskräfte ausschließlich über das zug- und druckstabile Verbindungselement und das damit verbundene Lager abfließen.

Erfindungsgemäß wird die Zwangsbewegung über ein flexibles, druck- und zugstabiles Antriebselement eingeleitet. Vorzugsweise wird hierzu ein Kabel ähnlich einem Bowdenzug verwendet, welches zweckmäßiger Weise von einem Antriebsaggregat bewegt wird. Da zu erwarten ist, dass die vorliegende Erfindung sowohl auf der rechten als auf der linken Fahrzeugseite eingesetzt wird, ist es sinnvoll, diese beiden symmetrisch angeordneten Vorrichtungen über ein einziges Antriebsaggregat anzusteuern. Ebenso ist es möglich, dass die vorliegende Erfindung bei einer Abdeckungsklappe angewandt wird, die mittig im Fahrzeug angeordnet ist.

Die konzeptionelle Funktionsweise sowie eine bevorzugte Ausführungsform der vorliegenden Erfindung wird anhand von Zeichnungen näher erläutert. Es zeigen:
Fig. 1 einen schematischen Aufbau der erfindungsgemäßen Vorrichtung zur Darstellung der konzeptionellen Funktionsweise;
Fig. 2 eine Explosionsdarstellung einer bevorzugten Ausführungsform der vorliegenden Erfindung;
Fig. 3 eine perspektivische Darstellung der vorliegenden Erfindung im geschlossenen Zustand;
Fig. 4 eine perspektivische Darstellung der vorliegenden Erfindung im halb geöffneten Zustand;
Fig. 5 eine perspektivische Darstellung der vorliegenden Erfindung im vollständig geöffneten Zustand.

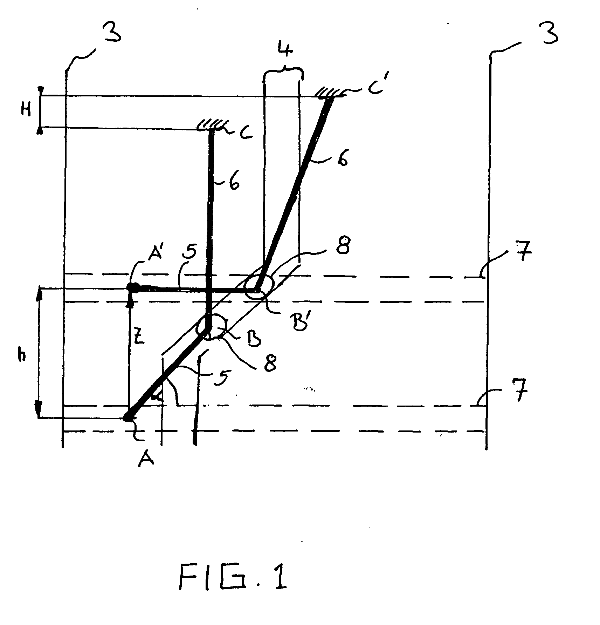

In der Darstellung gemäß Figur 1 wird der schematische Aufbau der erfindungsgemäßen Vorrichtung zur Veranschaulichung der konzeptionellen Funktionsweise gezeigt. Hierbei wird das erste Führungsmittel 3 schematisch durch die seitlichen Begrenzungen dargestellt, und das zweite Führungsmittel 4, welches im Wesentlichen eine Kulisse darstellt, die innerhalb des ersten Führungsmittels 3 angeordnet ist, gezeigt. In dem ersten Führungsmittel 3 ist ein erstes Gleitelement 7 gleitend angeordnet (dargestellt in Strichlinien). Fest mit dem ersten Gleitelement 7 ist im Punkt A der Schwenkarm 5 verbunden und drehbar um Punkt A gelagert. Der Schwenkarm 5 weist an seinem anderen Ende das zweite Gleitelement 8 auf, welches in dem zweiten Führungsmittel 4 gleitend angeordnet ist. An dem zweiten Gleitelement 8 ist weiterhin das Verbindungselement 6 angeordnet, das frei beweglich, vorzugsweise über ein Kugelgelenk mit dem zweiten Gleitelement 8 verbunden ist. Das Verbindungselement 6 ist am anderen Ende mit der Klappe 2 (nicht dargestellt) ebenfalls über ein Kugelgelenk fest verbunden. In der Verstauposition, die in Figur 1 mit den Buchstaben A, B und C bezeichnet wird, befindet sich das erste Gleitelement 7 in seiner tiefsten Position. Wird das erste Gleitelement 7 in Richtung Z um den Betrag h nach oben verschoben, bewirkt diese Bewegung eine Auslenkung des Schwenkarms 5, um einen Winkel alpha, wodurch das zweite Gleitelement 8 entlang der Zwangsführung im zweiten Führungsmittel 4 so verschoben wird, dass nach Zurücklegen des Weges h über die Umsetzung des zweiten Gleitelements 8 in dem zweiten Führungsmittel 4 im Punkt C lediglich eine Strecke H zurückgelegt wird. Aufgrund dessen verändert sich das Dreieck A, B und C zu einem Dreieck A', B' und C', wobei die Differenz zwischen h und H dazu genutzt werden kann, im Bereich des Punktes C die Klappe (nicht dargestellt) um eine Achse zu schwenken.

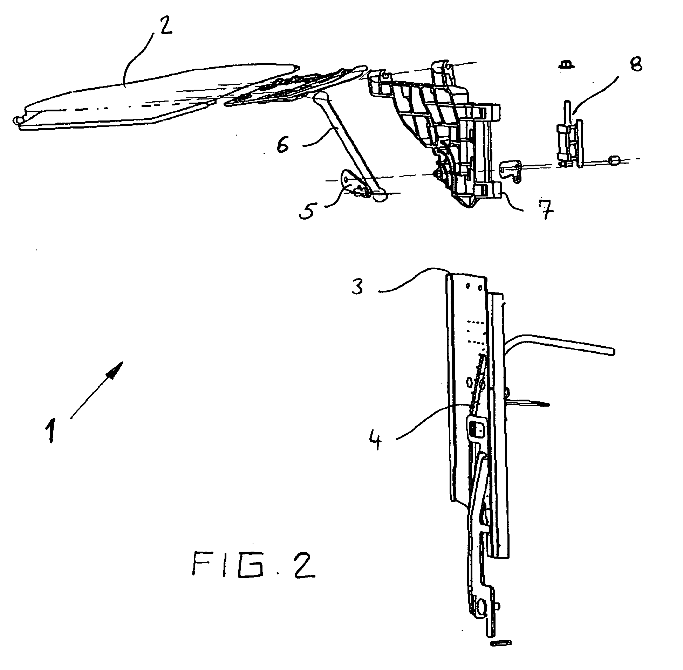

Figur 2 zeigt eine Explosionsdarstellung einer bevorzugten Ausführungsform der vorliegenden Erfindung, mit einer Klappe 2, im ersten Führungsmittel 3 in dem das zweite Führungsmittel 4 angeordnet ist. Ferner zeigt Figur 2 das erste Gleitelement 7 sowie das zweite Gleitelement 8. Ferner ist der Schwenkarm 5 sowie das Verbindungselement 6 gezeigt, ohne jedoch die Verbindungen zwischen den jeweiligen Elementen darzustellen.

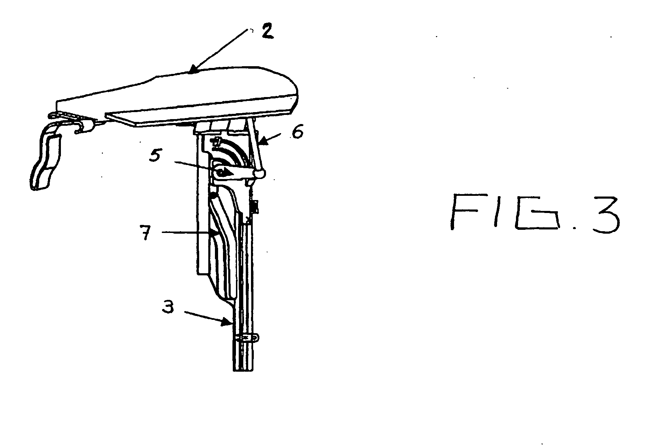

Figur 3 zeigt die bevorzugte Ausführungsform der vorliegenden Erfindung in geschlossenem Zustand, d.h. die Klappe 2 ist im Wesentlichen waagrecht angeordnet und deckt somit den nicht dargestellten Bereich vollständig ab.

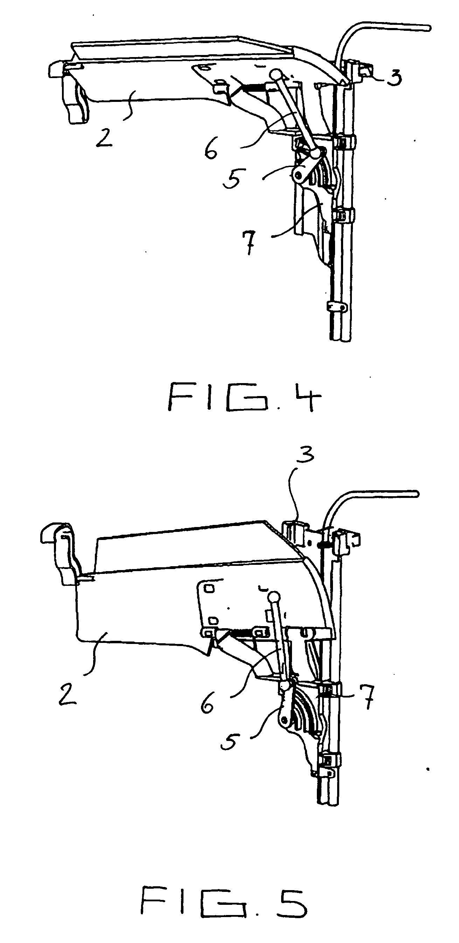

Figur 4 zeigt die Klappe 2 im halbgeöffneten Zustand. Hierzu schiebt das Verbindungselement 6 über den Antrieb des Schwenkarms 5 die Klappe 2 nach oben, wenn das erste Gleitelement 7 in dem ersten Führungsmittel 3 nach unten geschoben wird und dadurch den Schwenkarm 5 nach oben rotiert und somit das Verbindungselement 6 derart nach oben schiebt, dass die Klappe 2 ebenfalls eine Schwenkbewegung nach oben ausführt und sich so platzsparend an das erste Führungsmittel 3 anschmiegt.

Figur 5 zeigt diesen Zustand, bei dem die Klappe 2 vollständig geöffnet ist und sowohl der Schwenkarm 5 als auch das Verbindungselement 6 fast vollständig gestreckt vorliegt, um auch in diesem Zustand keinen zusätzlichen Raum zu beanspruchen. Erst wenn die Klappe 2 in dem in Figur 5 dargestellten Zustand geöffnet vorliegt, kann das Verdecksystem ungehindert passieren.

Ein wesentlicher Vorteil der vorliegenden Erfindung ist es daher, die Ansteuerung vollautomatisch bewerkstelligen zu können, sowie ferner eine wesentliche Platzersparnis über die erfindungsgemäße Kinematik zu erzielen.

### Bezugszeichenliste

- 1: - Ansteuerungseinrichtung
- 2: - Klappe
- 3: - erstes Führungsmittel
- 4: - zweites Führungsmittel
- 5: - Schwenkarm
- 6: - Verbindungselement
- 7: - erstes Gleitelement
- 8: - zweites Gleitelement

## Patentansprüche

1. Ansteuerungseinrichtung (1) für Abdeckungen bei Kraftfahrzeugen, bestehend aus einer Abdeckungsklappe (2), die aus einer im Wesentlichen vertikalen Verstauposition in eine Funktionsposition durch eine Zwangsbewegung überführbar ausgebildet ist, wobei die Zwangsbewegung über folgende Mittel ausgeführt wird:
- ein erstes Führungsmittel (3), in dem ein erstes Gleitelement (7) im Wesentlichen in vertikaler Bewegungsrichtung beweglich gelagert ist;
- ein zweites Führungsmittel (4), in dem ein zweites Gleitelement (8) in mindestens zwei zueinander senkrechten Bewegungsrichtungen beweglich gelagert ist;
- einen mit dem zweiten Gleitelement (8) gekoppelten Schwenkarm (5), der mechanisch mit der Abdeckungsklappe derart verbunden ist, dass bei einer vertikalen Bewegung des zweiten Gleitelements (8) eine vertikale Longitudinalbewegung der Abdeckungsklappe (2) eingeleitet wird und bei einer horizontalen Bewegung des zweiten Gleitelements (8) eine Rotationsbewegung im Schwenkarm (5) und somit eine Schwenkbewegung in der Abdeckungsklappe eingeleitet wird, **dadurch gekennzeichnet, dass**
der Schwenkarm (5) über ein zug- und druckstabiles Verbindungselement (6) mit der Abdeckungsklappe (2) verbunden ist, das so angeordnet ist, dass Lastkräfte, die auf die Abdeckungsklappe (2) wirken, aufgenommen und abgeleitet werden.

2. Ansteuerungseinrichtung (1) für Abdeckungen bei Kraftfahrzeugen nach Anspruch 1, **dadurch gekennzeichnet, dass** das zug- und druckstabile Verbindungselement (6) in seiner Funktionsposition so gelagert ist, dass die Lastkräfte von einer tragenden Struktur aufgenommen werden.

3. Ansteuerungseinrichtung (1) für Abdeckungen bei Kraftfahrzeugen nach einem der vorherigen Ansprüche, **dadurch gekennzeichnet, dass** die Zwangsbewegung über ein flexibles, druck- und zugstabiles Antriebselement eingeleitet wird.

4. Ansteuerungseinrichtung (1) für Abdeckungen bei Kraftfahrzeugen nach Anspruch 3, **dadurch gekennzeichnet, dass** das flexible, druck- und zugstabile Antriebselement mehrere Ansteuerungseinrichtungen betreibt.

## Claims

1. Control device (1) for covers for motor vehicles, consisting of a covering flap (2) which is designed so as to be transferrable from a substantially vertical storage position into a functional position by means of a compulsory movement, wherein the compulsory movement is executed via the following means:
- a first guide means (3) in which a first sliding element (7) is mounted so as to be movable substantially in a vertical direction of movement;
- a second guide means (4) in which a second sliding element (8) is mounted so as to be movable in at least two mutually perpendicular directions of movement;
- a pivoting arm (5) which is coupled to the second sliding element (8) and is mechanically connected to the covering flap in such a manner that, upon a vertical movement of the second sliding element (8), a vertical longitudinal movement of the covering flap (2) is initiated and, upon a horizontal movement of the second sliding element (8), a rotational movement in the pivoting arm (5) and therefore a pivoting movement in the covering flap is initiated, **characterized in that** the pivoting arm (5) is connected to the covering flap (2) via a tension- and compression-stable connecting element (6) which is arranged in such a manner that load forces which act on the covering flap (2) are absorbed and dissipated.

2. Control device (1) for covers for motor vehicles according to Claim 1, **characterized in that** the tension- and compression-stable connecting element (6) is mounted in the functional position thereof in such a manner that the load forces are absorbed by a supporting structure.

3. Control device (1) for covers for motor vehicles according to either of the preceding claims, **characterized in that** the compulsory movement is initiated via a flexible, tension- and compression-stable driving element.

4. Control device (1) for covers for motor vehicles according to Claim 3, **characterized in that** the flexible and tension- and compression-stable driving element drives a plurality of control devices.

## Revendications

1. Dispositif de commande (1) pour des recouvrements dans des véhicules automobiles, constitué d'un clapet de recouvrement (2), qui est réalisé de manière à pouvoir être transféré d'une position de rangement essentiellement verticale dans une position fonctionnelle par un mouvement forcé, le mouvement forcé étant réalisé par le biais des moyens suivants :
- un premier moyen de guidage (3) dans lequel un premier élément de glissement (7) est monté de manière mobile essentiellement dans la direction de déplacement verticale ;
- un deuxième moyen de guidage (4), dans lequel un deuxième élément de glissement (8) est monté de manière mobile dans au moins deux directions de déplacement perpendiculaires l'une à l'autre ;
- un bras pivotant (5) accouplé au deuxième élément de glissement (8), qui est connecté mécaniquement au clapet de recouvrement de telle sorte que dans le cas d'un mouvement vertical du deuxième élément de glissement (8) un mouvement longitudinal vertical du clapet de recouvrement (2) soit amorcé, et que dans le cas d'un mouvement horizontal du deuxième élément de glissement (8) un mouvement de rotation soit amorcé dans le bras pivotant (5) et de ce fait un mouvement de pivotement soit amorcé dans le clapet de recouvrement, **caractérisé en ce que**
le bras pivotant (5) est connecté par le biais d'un élément de liaison (6) stable en traction et en compression au clapet de recouvrement (2), lequel élément est disposé de telle sorte que des forces de charge qui agissent sur le clapet de recouvrement (2) soient reçues et déviées.

2. Dispositif de commande (1) pour des recouvrements dans des véhicules automobiles selon la revendication 1, **caractérisé en ce que** l'élément de liaison (6) stable en traction et en compression est monté dans sa position fonctionnelle de telle sorte que les forces de charge soient reçues par une structure portante.

3. Dispositif de commande (1) pour des recouvrements dans des véhicules automobiles selon l'une quelconque des revendications précédentes, **caractérisé en ce que** le mouvement forcé est amorcé par un élément flexible stable en traction et en compression.

4. Dispositif de commande (1) pour des recouvrements dans des véhicules automobiles selon la revendication 3, **caractérisé en ce que** l'élément d'entraînement flexible stable en traction et en compression entraîne plusieurs dispositifs de commande.
